Europäisches Patentamt

European Patent Office

Office européen des brevets

(11) Publication number: **0 285 867 B1**

# EUROPEAN PATENT SPECIFICATION

(45) Date of publication of patent specification: **02.12.92** (51) Int. Cl.5: **G11B 21/08**

(21) Application number: **88104093.5**

(22) Date of filing: **15.03.88**

(54) **Linear actuator using a compound parallel bendable element suspension system.**

(30) Priority: **10.04.87 US 36629**

(43) Date of publication of application:
**12.10.88 Bulletin 88/41**

(45) Publication of the grant of the patent:
**02.12.92 Bulletin 92/49**

(84) Designated Contracting States:
**DE FR GB**

(56) References cited:
**GB-A- 2 090 038**
**US-A- 3 882 541**
**US-A- 4 426 669**

(73) Proprietor: **International Business Machines Corporation**
**Old Orchard Road**
**Armonk, N.Y. 10504(US)**

(72) Inventor: **Hedge, Suryanarayan Ganesh**
**P.O. Box C-30**
**Hollowville New York 12530(US)**
Inventor: **Hammer, Robert**
**36 Knollcrest Drive**
**Brookfield Center Connecticut 06805(US)**

(74) Representative: **Herzog, Friedrich Joachim, Dipl.-Ing.**
**IBM Deutschland GmbH Schönaicher Strasse 220**
**W-7030 Böblingen(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to an apparatus for the linear translation of read/write heads in a data recording system in accordance with the preamble of claim 1.

An apparatus in accordance with the preamble of claim 1 is known from US-A-4 426 669. This known apparatus includes as drive means one or more transducers that are mounted to the bottom of a U-frame carrying a coil between the legs. The coil is slipped onto and runs over a bar, facing two permanent magnets. One leg of the U-frame is suspended on leaf springs, being connected also to the base for carrying out a translation motion of read/write heads. These known drive means do form a relative complicated construction that in view of the permanent magnets is furthermore bulky and space-consuming.

In disk data recording systems, linear actuation of read/write heads in the direction of the disk radius is the desired mechanism for accessing data tracks. In lower track densities disk file systems, rotary actuators, which translate the read/write heads, non-linearly, through an arc are acceptable and used. In higher track density disk file systems, highly accurate, linear actuators, such as voice coil motors, are required. These highly accurate, linear actuators require elaborate bearing assemblies, guides, etc. to effect their linear motion. Heretofore, there has not been a simple, cost effective means by which highly accurate, linear track actuation has been attainable.

While simple parallel spring suspensions have been used to provide head actuation (see, for example, U.S. Patent No. 3,531,126, issued to Tsukagoshi), these devices are known to introduce skew angle errors (rotation of the head relative to track) when used with magnetic recording heads.

For example, when a deflection force perpendicular to the leaf spring is applied to the movable head end of a parallel leaf spring suspension, skew angle errors occur because of the shortening of springs. As the movable head end is translated across the disk file, the effective length of the springs is reduced which shifts the location of the head in relation to the tracks on the disk file (see for example, U.S. Patent Nos. 4,374,402; 4,188,645; 3,702,192; 3,634,309; and 3,531,126). These skew angle errors make simple parallel spring suspension systems unacceptable for high density recording disk files.

While compound parallel spring suspensions are known, heretofore, such spring suspensions have not been used in data storage applications. While such spring suspensions are known not to have problems with skewing, problems of accurate translation in driving the load and problems of harmonic oscillations of the suspension have caused such spring suspensions to be regarded as unsuitable for read/write head actuation disk files.

It is therefore an object of the present invention to overcome the drawbacks of the known solutions and to provide for a simple, cost efficient, highly accurate linear translation device for use with high density recording disk files.

These and other objects are solved in advantageous manner by the invention as laid down in the claims.

In accordance with the present invention an apparatus for the linear translation of read/write heads in a data recording system is disclosed herein. The apparatus comprises a compound bendable element suspension with driving means connected thereto. The compound bendable element suspension comprises two sets of cantilevered elements. One set of said elements is attached and cantilevered from a non-moveable support post to a movable connecting means at their other end. The other set of said elements are, then, attached in common to said connecting means and cantileverly extended therefrom and matingly connected to a read/write head assembly (carrier means) and drive means at their other end.

In one embodiment, said compound bendable elements are leaf springs maintained in an upper and lower planar relationship. In said embodiment, the driving means is connected at the carrier means end of said springs. With this arrangement, the compound spring assembly can be positioned so that the tension and/or compression of the springs provides the loading force for engaging the drive means.

In a different embodiment, the compound bendable elements are arranged in the same plane with said driving means connected as defined above.

Various methods for driving said suspension systems are possible including but not limited to: rotary stepper motor and friction drive systems, rotary stepper motor and taut band drive systems, and rack and pinion drive systems.

The foregoing and other objects, features and advantages of the invention will be apparent from the following more particular description of the invention as illustrated in the accompanying drawing.

In the drawing showing different embodiments of the invention, the figures show in brief description the following:

FIGS. 1-3 are isometric and top views of a linear translation apparatus according to the present invention incorporating a bi-planar compound spring assembly and a rotary stepper motor with a frictional drive;

FIG. 4 is an isometric view of a linear translation apparatus according to the present invention incorporating the compound spring assembly of FIG. 1 and a rotary stepper motor with a rack and pinion drive;

FIG. 5 is an isometric view of a linear translation apparatus according to the present invention incorporating the compound spring assembly of FIG. 1 and a rotary stepper motor and taut band drive;

FIG. 6 is an isometric view of a linear translation apparatus according to the present invention incorporating the compound spring assembly of FIG. 1 and a voice coil motor drive;

FIGS. 7-9 are isometric and top views of a linear translation apparatus according to the present invention incorporating a single plane compound spring assembly and voice coil motor drive; and

FIG. 10 is an isometric view of an alternative flexural element for the subject invention.

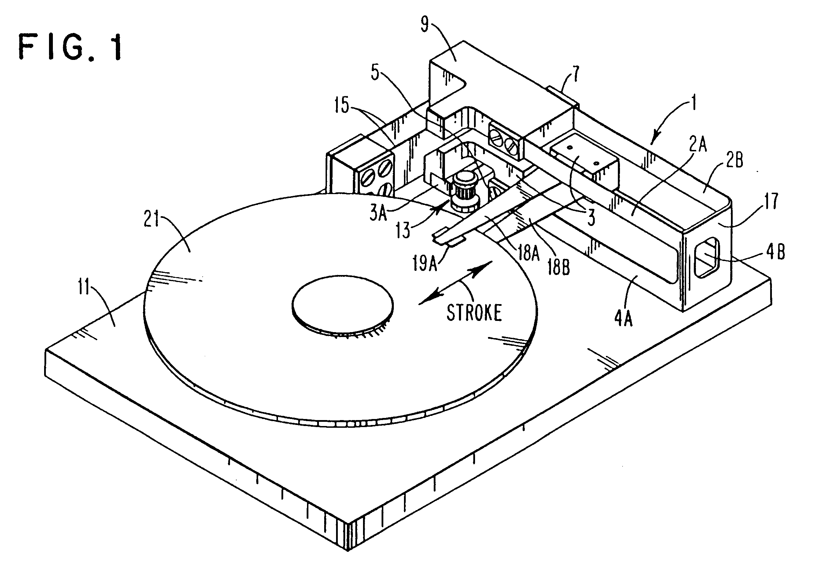

FIG. 1 is an isometric view of a typical data recording arrangement wherein the read/write head assembly actuating means comprises a compound spring system with a rotary stepper motor and frictional drive means.

The configuration and constructions of those elements (i.e. read/write heads, disks, flexure etc.) common to the various embodiments of the subject invention are of conventional design and materials. Therefore, the disks will be recognized as rotatable storage mediums of any of a variety of embodiments depending. on the specific type of data recording desired. The read/write heads and/or the air bearing head/slider are operationally located adjacent to said disk and suspended from a flexure arm suspension which is designed to move in a linear translation motion for reading and recording from track to track on said recording medium. Common terms, describing like elements as recognized by one skilled in the art will be used interchangeably herein.

Referring now to FIG. 1, the portions of the linear translation mechanism there shown, comprise a compound parallel leaf spring assembly 1 arranged to support a carrier mass 3 connected at end 5 thereof. The leaf spring assembly 1 is supported at its end 7 by support post 9 which is fixedly attached so as not to move in the direction of the stroke.

It should be recognized by those skilled in the art that the leaf spring assembly 1 can be configured in any of a number equivalent but different arrangements to form a compound parallel spring suspension. In the present embodiment the leaf spring assembly is shown to comprise a unitary compound spring structure joined at the connecting means 17, an integral part of the spring. However, the structure could consist of four (4) separate leaf springs, each paired set of springs being attached consistent with the spring arrangement of FIG. 1 with means 17 connecting the upper and lower spring pairs.

Continuing now with FIG. 1, the carrier mass 3 is positioned against a rotating element 13. The rotating element 13 comprises a knurled shaft attached to a stepper motor (not shown). As assembled in the FIG. 1, the knurled shaft 13 bears against the carrier mass at element 3A for establishing frictional contact thereto. In the present embodiment, element 3A is a nylon block which has been attached to the carrier mass 3. Optionally, the element 3A can be continually held in contact with the knurled shaft 13 by use of preload springs 15. The shifting of the support post 9 by said springs 15 causes loading of the element 3A into contact with the knurled shaft 13. It should be recognized by those skilled in the art that other means of loading said frictional element to said drive means are possible.

Further, extended in a cantilevered fashion from and attached to said carrier mass 3, are flexure suspension arms 18A and 18B. These flexure arms have suspended therefrom, read/write heads and/or air bearing head/sliders 19A (and 19B not shown).

In operation, the rotary motion of the stepper motor (not shown) causes the knurled shaft 13 to rotate at some incremental rate. The rotation of the knurled shaft 13 thereby drives the nylon element 3A with carrier mass 3 attached therewith in the radial direction. This displacement of the carrier mass 3 causes the translation of flexure arms 17A and 17B across the disk 21 moving the heads 19A and 19B linearly from track to track. As shown in FIG. 1 the actuator is positioned mid-stroke.

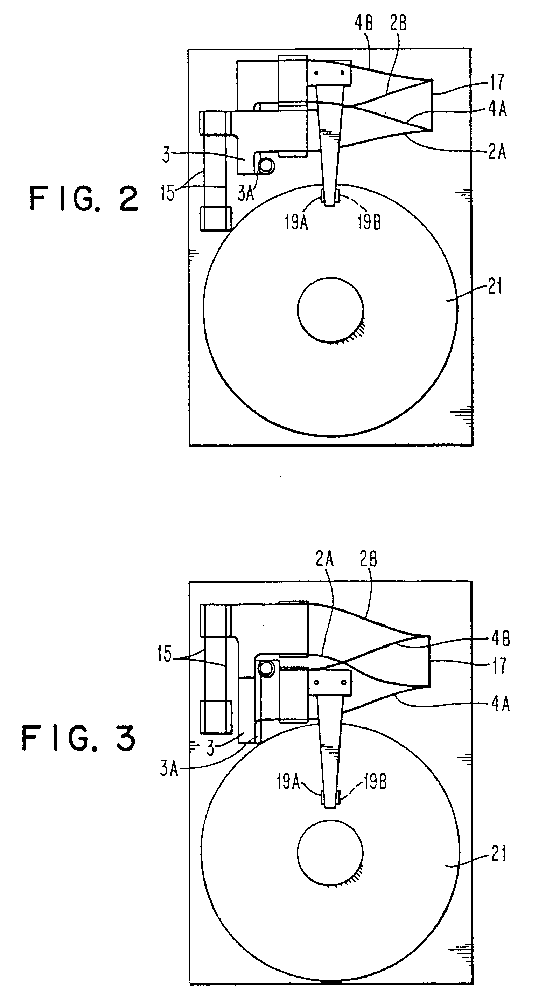

Referring now to FIG. 2, a top view of the apparatus of FIG. 1, wherein the read/write heads 19A and 19B have been positioned or driven to the outside track of the recording medium. Outside and inside track designation being recognized in the art as terms for denoting innermost (nearest spindle) tracks and outermost tracks.

In this actuated position, nylon block 3A attached to carrier mass 3 has been driven to the farthest outer limit of its travel. This change in position of the carrier mass 3 and block 3A thereby causes springs 2A and 2B and 4A and 4B to flex and displace the connecting means 17. This displacement of means 17 is in the same direction as the displacement of the carrier mass 3. However, displacement of the means 17 a result of the equal flexure of the upper and lower springs 2A and B and 4A and B, respectively, and the means 17 is therefore only displaced 1/2 the distance of the total linear displacement of the read/write head.

FIG. 3 is a further top view of the actuation device of FIG. 1. Now, however, the read/write heads have been positioned to the innermost track of the recording disk 21. As with FIG.. 2, the connecting means 17 mass has now been displaced in the direction of the stroke by 1/2 of the total displacement distance of the read/write heads per the same bending response of the compound spring suspension of FIG. 2.

Thus, the read/write head can be moved incrementally and in a reciprocating manner from track to track on disk 21 in the direction of the stroke indicated. The flyheight of the transducer is unaffected by said spring actuation as the spring suspension is stiff and unbending in the vertical plane. Skew angle errors for the embodiment of FIGS. 1-3 have been measured to be less than 23 milliradians skew angle for a stroke of appropriately 25mm. This is significantly less than the skew angle error of a comparable swing arm actuator known in the art to be on the order of 10 degrees for a stroke of 25mm.

As stated above, in an alternative frictional drive embodiment using the compound spring assembly of FIG. 1, frictional contact can be maintained by the compression of the parallel springs 2A and 2B and tension of springs 4A and 4B. This can be accomplished by offsetting the upper support platform 9 in the spring's horizontal plane.

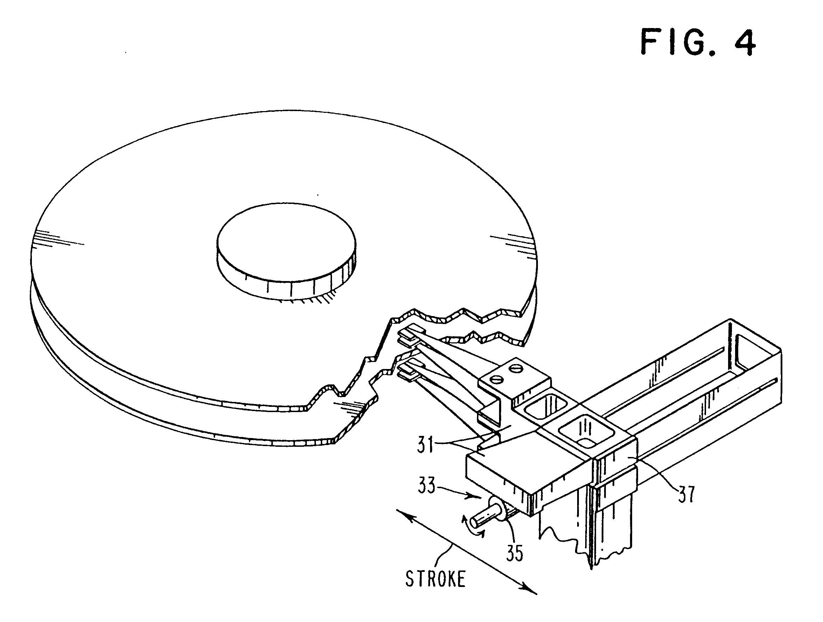

Referring now to FIG. 4, there is shown an isometric view of another embodiment for the linear translation apparatus according to the subject invention. While the embodiment of FIG. 4 and spring actuation mechanism is identical to that of FIG. 1, the driving means has been changed to a rack and pinion assembly.

The carrier mass 31, now has attached thereto gear rack 33 which is loaded in the vertical direction against pinion 35 wherein pinion 35 rotates in the direction as shown and is connected to a stepper motor (not shown). Now, with rotation of pinion 35, gear rack 33 is driven horizontally in the direction of the stroke. It is noted that while in FIG. 1, the lower spring of the compound spring assembly, is attached to the driver means, in FIG. 4, it is the upper spring end 37 which is to be translated. It should be understood that the selection of translated spring end is a matter of choice, as long as the paired other end of the spring assembly remains fixed.

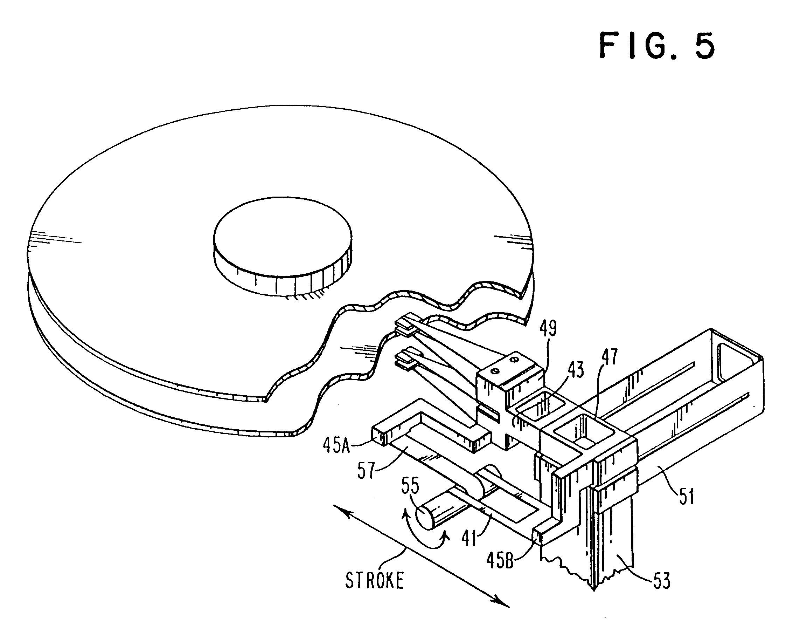

FIG. 5 is an isometric view of a still further embodiment of a linear translation apparatus according to the subject invention. As in FIGS. 1 and 4 the spring actuation mechanism is the same as has been described with FIGS. 1-3.

Differently, however, the driving means. has been replaced by a taut drive band assembly. Now, a drive band 41 is mounted between two posts 45A and 45B which are attached to a carrier mass 43. The carrier mass 43 now, includes these posts 45A and 45B, and the spacer between the upper spring pair 47, and the blocks 49 on which the transducer assemblies are mounted. The lower spring pair 51 is attached to the post 53 and, as stated above, this is a matter of choice and can be reversed with the upper spring pair if desired. Rotation of the stepper motor (not shown) now causes rotation of band shaft 55, and winds and unwinds band 41 for linear translation of the recording transducer in the direction of the stroke indicated.

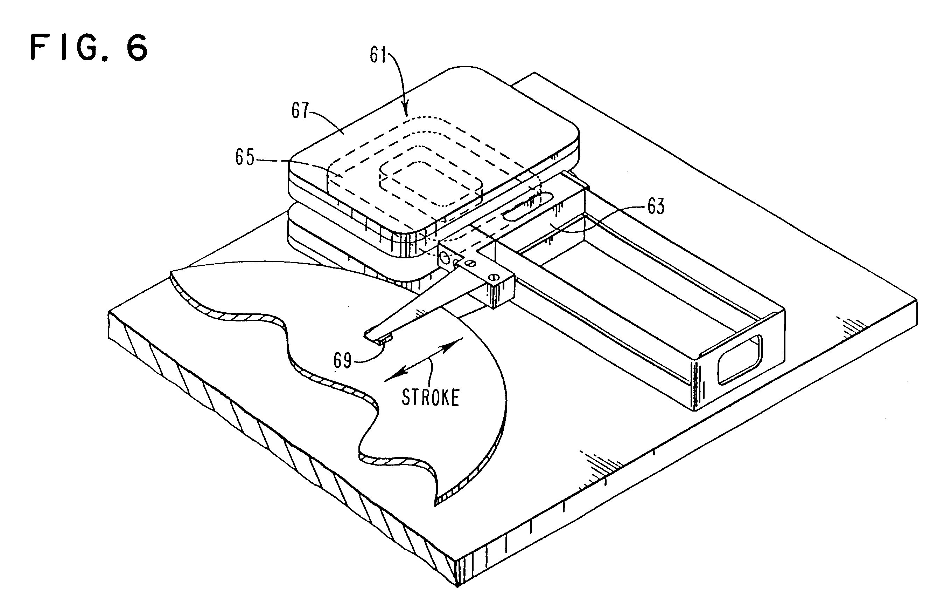

FIG. 6 illustrates a isometric view of the preferred embodiment of the subject invention. In FIG. 6, the identical spring actuation mechanism of FIGS. 1, 4, and 5 is attached to a voice coil motor 61 which is used to translate the carrier mass 63 in a linear stroke. With this embodiment, the voice coil armature 65 is directly attached to the carrier mass. Thus, there is a virtual elimination of the frictional forces between the carrier mass 63 and the drive system 61. The drive system 61 moves the carrier mass 63 electromagnetically with no mechanical contact. As a result, the access time can be made as short as the mechanical system, comprising the springs and connecting mass, will allow for a given voice coil motor design.

It should be recognized by those skilled in the art that by voice coil motor what is meant, is a conventional voice coil actuator as known in the prior art for moving transducer heads. With such motors the magnetic stator 67 provides the field which actuator 65 utilizes to move the heads linearly. The coil current produces a force in the direction of the stroke moving armature 65 and transducer 69 in a direction commensurate therewith. By using the voice coil motor, the coil current can be made part of the servo control loop, thus providing a simple and efficient mechanism for insuring selected track registration. In addition, there are no undesirable net forces generated perpendicular to the flexure of the disk.

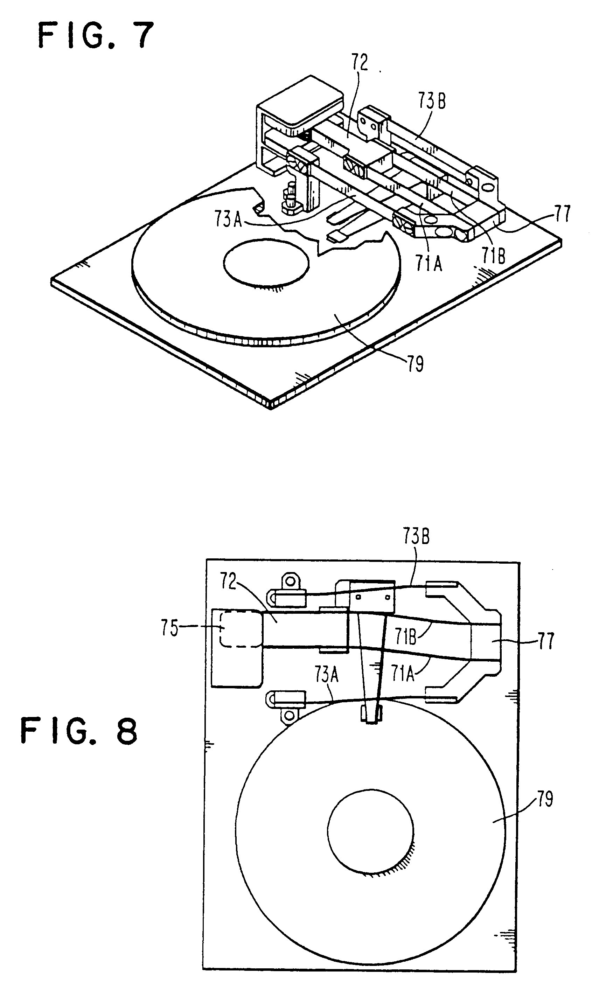

FIG. 7 is an isometric view of a compound spring actuation assembly employing the identical voice coil means of FIG. 6 wherein said springs are co-planar. The apparatus as shown in FIG. 7 is similar to that apparatus of FIG. 6 except that now instead of upper and lower springs, the springs are positioned as inner 71A and 71B and outer 73A and 73B springs. Also, the carrier mass 72 has been extended so as to link to the voice coil armature 75. As shown in FIG. 7, the actuator is positioned mid-stroke adjacent to recording medium 79.

Referring now to FIG. 8, a top view of the apparatus of FIG. 7, wherein the read/write heads have been positioned or driven to the outside track of the recording medium 79. In this actuated position, armature 75 has been driven to the farthest limit of its travel. This change in position of armature 75 thereby causes springs 71A and 71B ahd 73A and 73B to flex and reposition with connecting means 77. This displacement of connecting means 77 is in the same direciton as the displacement of the armature 75. However, the displacement of the connecting means 77 is dependent upon the equal flexure of inner and outer springs 71A and 71B and 73A and 73B, respectively. Therefore, the means 77 is only displaced by 1/2 the distance of the total linear displacement of the armature. It can be readily seen that the above is a result of the shortening of springs 71A and 71B, offset by the equal shortening of springs 73A and 73B.

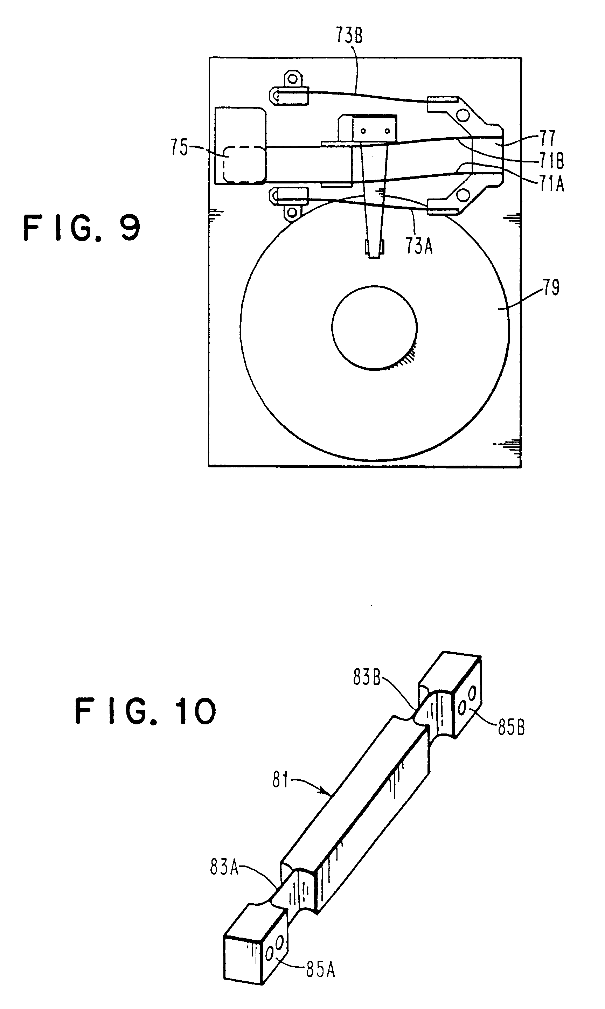

FIG. 9 is a further top view of the actuation device of FIG. 7. Now, however, the read/write heads have been driven to the innermost track of the recording medium. As with FIG. 8, the connecting means 77 has been displaced in direction of the armature 75 displacement but only for 1/2 of the displacement distance per the equal bending response of the compound springs 71A and 71B and 73A and 73B.

While the above embodiments have all been described using leaf springs, other bending elements are able to be used to provide spring-like action.

In FIG. 10, one type of bending element, a flexural element is shown. This flexural element has a stiff member or link 81 connected to flexural links 83A and 83B. Thus, the stiff member link 81 has at its ends thin flexural elements 83A and 83B for the spring action. Links 85A and 85B attach to flexures 83A and 83B for fixation of bendable element.

## Claims

1. An apparatus for the linear translation of read/write heads (19A, B) in a data recording system wherein said read/write heads are located adjacent to recording mediums (21) such that by actuation of said apparatus said read/write heads can be made to move in a reciprocal manner for accessing tracks of said recording medium comprising:
a first pair of leaf springs (2A, B) for the suspension and displacement of said read/write heads across said recording medium said first pair of leaf springs being fixedly and cantileverly attached to a non-moving support post (9) at one end (7) and a movable connection means (17) at the other end,
a second pair of leaf springs (4A, B) for the suspension and displacement of said read/write heads across said recording medium said second pair of leaf springs being fixedly and cantileverly attached to said movable connection means (17) at one end and matingly connected to said read/write head assembly (3, 18A, B, 19A, B) and drive means (3A, 13) at said other end,
characterized in that,
said drive means (3A, 13) for displacing said read/write heads linearly (STROKE) across said recording medium is a rotary stepper motor engaged by friction contact to a carrier mass and said friction contact of said drive means to said carrier mass is maintained by compression and/or tension of said two pairs of leaf springs.

2. Apparatus in accordance with claim 1, characterized in that, said two pairs of leaf springs (71A, B; 72A, B) are mounted in the same plane.

3. Apparatus according to claim 1 or 2, wherein said rotary stepper motor is engaged via a pinion (35) to a rack (33) on said carrier mass (31), or a taut drive band assembly (41, 55, 57) attached to said carrier mass (43).

## Patentansprüche

1. Eine Vorrichtung zur linearen Bewegung von Schreib-/Leseköpfen (19A, B) in Datenaufzeichnungssystemen, wobei die Schreib-/Leseköpfe derart zu den Datenträgern (21) angeordnet sind, daß durch Betätigen der Vorrichtung die Schreib-/Leseköpfe für den Zugriff auf die Spuren des Datenträgers hin- und zurück bewegt werden können,
umfassend:
ein erstes Paar Blattfedern (2A, B) für die Aufhängung und Bewegung der Schreib-/Leseköpfe über den Datenträger, wobei dieses erste Paar Blattfedern mit einem Ende (7) in einer starren Halterung (9) freitragend und fest montiert ist und sich am anderen Ende ein bewegliches Verbindungsstück (17) befindet,
ein zweites Paar Blattfedern (4A, B) für die Aufhängung und Bewegung der Schreib-/Leseköpfe über den Datenträger, wobei dieses zweite Paar Blattfedern mit einem Ende an dem beweglichen Verbindungsstück (17) freitragend und fest montiert ist und an dem anderen Ende mit der Anordnung der Schreib-/Leseköpfe (3, 18A, B, 19A, B) und dem Antrieb (3A, 13) abgestimmt verbunden ist,
dadurch gekennzeichnet, daß
für den Antrieb (3A, 13) zur linearen Bewegung (HUB) der Schreib-/Leseköpfe über den Datenträger ein rotierender Schrittmotor kraftschlüssig mit einem Trägerelement verbunden ist und dieser Kraftschluß durch Druck- und/oder Zugspannungen der zwei Paar Blattfedern aufrecht erhalten wird.

**2.** Vorrichtung nach Anspruch 1,
dadurch gekennzeichnet, daß
die besagten zwei Paar Blattfedern (71A, B;
72A, B) in derselben Ebene montiert sind.

**3.** Vorrichtung nach Anpruch 1 oder 2, wobei der besagte rotierende Schrittmotor mittels Ritzel (35) und Zahnstange (33) mit dem Trägerelement (31) im Eingriff steht, oder eine Verbindung mit dem Trägerelement (43) über eine SpannbandVorrichtung (41, 55, 57) besteht.

**Revendications**

**1.** Appareil pour la translation linéaire de têtes de lecture/écriture (19A, B) dans un système d'enregistrement de données dans lequel lesdites têtes de lecture/écriture sont adjacentes à des supports d'enregistrement (21) de sorte que, par activation dudit appareil, on peut déplacer lesdites têtes de lecture/écriture en va-et-vient pour accéder à des pistes dudit support d'enregistrement, comprenant :

une première paire de ressorts à lame (2A,B) pour la suspension et le déplacement desdites têtes de lecture/écriture sur ledit support d'enregistrement, la dite première paire de ressorts à lame étant attachée de façon fixe et en porte-à-faux à un montant support fixe (9), à une extrémité (7), et comportant un élément de liaison mobile (17) à l'autre extrémité,

une deuxième paire de ressorts à lame (4A,B) pour la suspension et le déplacement desdites têtes de lecture/écriture sur ledit support d'enregistrement, la dite deuxième paire de ressorts à lame étant attachée de façon fixe et en porte-à-faux audit élément de liaison mobile (17), à une extrémité, et étant reliée en coopération audit assemblage de têtes de lecture/écriture (3,18A, B, 19A,B) et de moyens d'entraînement (3A,13) à ladite autre extrémité, caractérisé en ce que

lesdits moyens d'entraînement (3A,13) pour déplacer lesdites têtes de lecture/écriture linéairement (COURSE) sur ledit support d'enregistrement sont constitués par un moteur rotatif pas-à-pas en prise par contact de friction avec un bloc porteur, et ledit contact de friction des dits moyens d'entraînement avec ledit bloc porteur est maintenu par compression et/ou tension desdites deux paires de ressorts à lame.

**2.** Appareil suivant la revendication 1,
caractérisé en ce que lesdites deux paires de ressorts à lame (71A,B;72A,B) sont montées dans le même plan.

**3.** Appareil suivant la revendication 1 ou 2, dans lequel ledit moteur rotatif pas-à-pas est en prise, par l'intermédiaire d'un pignon (35), avec une crémaillère (33) prévue sur ledit bloc porteur (31), ou avec un dispositif à bande d'entraînement tendue (41,55,57) fixé audit bloc porteur (43).

# FIG. 1

FIG. 2

FIG. 3

FIG. 4

# FIG. 5

EP 0 285 867 B1

FIG. 6

## FIG. 7

## FIG. 8

73B

75

77
71B
71A

73A

79

FIG. 9

FIG. 10

83B

85B

81

83A

85A